# EUROPÄISCHE PATENTANMELDUNG

(11) **EP 0 698 740 A1**
(43) Veröffentlichungstag der Anmeldung: **28.02.1996**
(21) Anmeldenummer: 95109258.4
(22) Anmeldetag: 14.06.1995
(51) Int. Cl.: F16B 37/02

(54) **Blechelement vorzugsweise eines Hausgerätes**

(30) Priorität: 24.08.1994 DE 4430065
(71) Anmelder: Bosch-Siemens Hausgeräte GmbH, D-81669 München (DE)
(72) Erfinder: Neuhauser, Wilhelm, D-83301 Traunreut (DE)

(57) **Zusammenfassung**

Bei Schraubverbindungen insb. mit dünnen Blechmaterialien besteht oftmals das Problem, daß infolge der geringen Materialdicke ein ausreichendes Schraub-Drehmoment nicht erreichbar ist, auch dann nicht, wenn für das Muttergewinde ein Blechdurchzug oder ein Gewindeeindruck vorgesehen ist.

Zur Behebung dieses Problems ist gemäß der Erfindung im Gewindebereich das Blechmaterial des Blechelementes (1) durch ein zusätzliches Blechsegment (4) verstärkt, daß in den Blechdurchzug oder Gewindeeindruck (6) einbezogen ist und vorzugsweise als ausgeschnittener und in den Gewindebereich gebogener Teil des Blechelementes (1) ausgebildet ist.

## Beschreibung

Die Erfindung bezieht sich auf ein Blechelement gemäß dem Oberbegriff des Patentanspruches 1.

Bei Schraubverbindungen mit insb. dünnen Blechelementen und Blechschrauben besteht oftmals das Problem, daß das dünne, mit dem Muttergewinde versehene Blechmaterial einem geforderten Schrauben-Anzugsmoment oder allgemein Drehmoment nicht standhält. Dies gilt auch bei Blechelementen, bei denen das Muttergewinde in einem üblichen Blechdurchzug oder Gewindeeindruck angeordnet ist. Eine ausreichende Festigkeit der Schraubverbindung ist meist auch dadurch nicht zu erreichen, daß man zur Verdickung des Gewindebereiches das Blech randseitig umlegt oder faltet (O. Richter und R. v. Voss, Bauelemente der Feinmechanik, VEB-Verlag Technik Berlin 1959, Seite 92).

Der Erfindung liegt nun die Aufgabe zugrunde, ein Blechelement insb. geringer Blechdicke für eine Schraubverbindung so auszugestalten, daß durch eine einfache konstruktive Maßnahme ein Höchstmaß an Festigkeit in bezug auf die Schraubverbindung erreicht wird.

Diese Aufgabe wird gemäß der Erfindung gelöst durch die im Kennzeichnungsteil des Patentanspruches 1 angegebenen Maßnahmen.

Versuche haben gezeigt, daß durch die Materialverstärkung und deren Einbeziehung in den Blechdurchzug oder Gewindeeindruck eine überraschend hohe Festigkeit der Schraubverbindung, also ein hohes Eindrehmoment erreicht wird, da bei der erfindungsgemäßen Maßnahme nicht nur das, das Schraubengewinde umgebende Blechmaterial sondern auch der Blechdurchzug oder Gewindeeindruck selbst im Querschnitt verstärkt ist. Überraschenderweise hat sich gezeigt, daß das erfindungsgemäß ausgebildete Schraubengewinde zumindest hinsichtlich des Losdrehmoments höhere Werte besitzt als ein Schraubengewinde, das in ein einschichtiges Blechmaterial mit einer der erfindungsgemäßen, z.B. verdoppelten Blechdicke entsprechenden Blechdicke eingearbeitet ist. Diese Vorteile sind insbesondere signifikant bei Blechmaterialien mit einer Blechdicke von weniger als 0,6 mm, bei denen üblicherweise geforderte Drehmomente von z.B. 180 Newton (N) nicht erreicht werden können. Gemäß einer vorteilhaften Ausgestaltung der Erfindung besteht hinsichtlich der Plazierung des Schraubengewindes im Blechelement völlige Freizügigkeit, dadurch, daß das Blechsegment als ausgeschnittener und in den Gewindebereich gebogener Teil des Blechelementes ausgebildet ist.

Die Erfindung ist anhand eines in der Zeichnung dargestellten Ausführungsbeispieles nachstehend erläutert.

Es zeigt:
- Fig. 1: die perspektivische Darstellung eines Teiles eines Blechelementes mit Gewindeeindruck,
- Fig. 2: eine Schnittansicht des Blechelementes mit eingeschraubter Blechschraube.

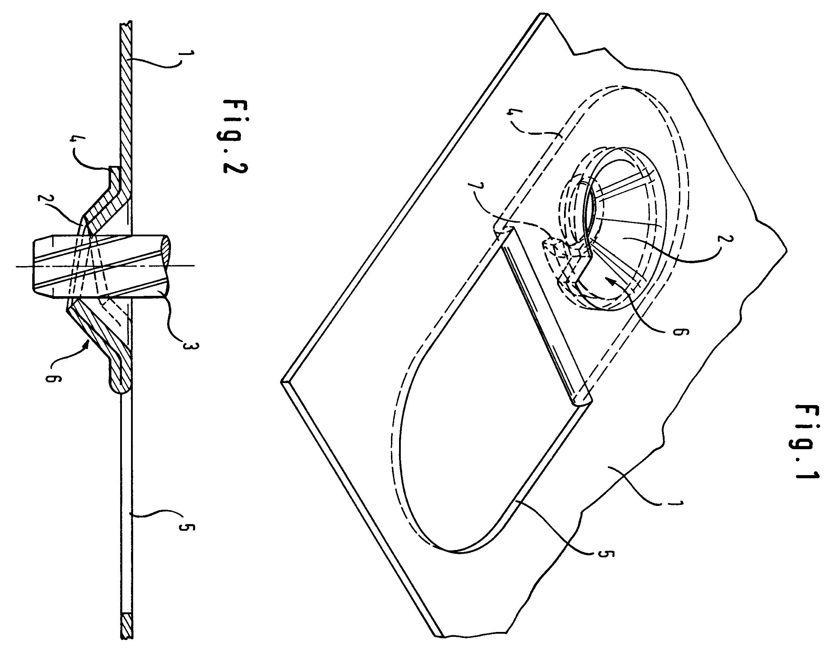

In den Figuren ist ein Teil eines ebenen Blechelementes 1 z.B. eines Hausgerätegehäuses oder dergleichen gezeigt, das mit einem Schraubengewinde 2 zum Einbringen einer Blechschraube 3 versehen ist. Das Blechelement 1 hat z.B. eine Blechdicke von weniger als 0,6 mm. Im Gewindebereich ist aus dem Blechmaterial ein Blechsegment 4 freigeschnitten bzw. freigestanzt entsprechend der portalförmigen Freischnitts- oder Durchreißkontur 5 gemäß Figur 1. Dieses freigeschnittene und durchgerissene Blechsegment 4 ist um 180° in den Gewindebereich des Blechelementes 1 umgebogen bis zur Anlage und Abstützung auf dem übrigen Blechmaterial, wonach durch einen Stanz- und Prägevorgang das verstärkte, im Ausführungsbeispiel gedoppelte Blechmaterial als Einheit mit einem sogenannten Gewindeeindruck 6 versehen wird, wobei das Blechsegment 4 in diesen Gewindeeindruck 6 mit einbezogen ist. Der Gewindeeindruck 6 besitzt an dem entsprechend der Gewindesteigung der Blechschraube 3 schräggestellten, stumpfen Ende des kegelförmigen Eindruckes das Schraubengewinde 2 z.B. in Form eines einzigen Gewindeganges. Zur Erzeugung der Schrägstellung besitzt der Gewindeeindruck 6 in bekannter Weise einen den Kegelmantel durchtrennenden Einschnitt 7.

## Patentansprüche

1. Blechelement vorzugsweise eines Hausgerätes, das wenigstens einen ein Schraubengewinde aufweisenden Blechdurchzug oder Gewindeeindruck besitzt, **dadurch gekennzeichnet,** daß im Gewindebereich das Blechmaterial des Blechelenentes (1) durch ein zusätzliches, unmittelbar auf dem Blechmaterial aufliegendes Blechsegment (4) verstärkt und in den Blechdurchzug oder Gewindeeindruck (6) einbezogen ist.

2. Blechelement nach Anspruch 1, dadurch gekennzeichnet, daß das Blechsegment (4) als freigeschnittener und in den Gewindebereich gebogener Teil des Blechelementes (1) ausgebildet ist.

3. Blechelement nach einem der vorhergehenden Ansprüche, dadurch gekennzeichnet, daß das Blechelement (1) eine Blechstärke von weniger als 1 mm, vorzugsweise von weniger als 0,6 mm besitzt.
